# FASCICULE DE BREVET EUROPEEN

(11) **EP 3 507 542 B1**
(45) Date de publication et mention de la délivrance du brevet: **16.11.2022**
(21) Numéro de dépôt: 17764780.7
(22) Date de dépôt: 30.08.2017
(51) Int. Cl.: F21S 41/143, F21S 41/64

(54) **DISPOSITIF D'ÉCLAIRAGE ET/OU DE SIGNALISATION, NOTAMMENT POUR VÉHICULE AUTOMOBILE**
BELEUCHTUNGS- UND/ODER SIGNALISIERUNGSVORRICHTUNG, INSBESONDERE FÜR EIN KRAFTFAHRZEUG
LIGHTING AND/OR SIGNALLING DEVICE, IN PARTICULAR FOR AN AUTOMOTIVE VEHICLE

(30) Priorité: 31.08.2016 FR 1658102
(43) Date de publication de la demande: 10.07.2019
(73) Titulaire: Valeo Vision, 93012 Bobigny Cedex (FR)
(72) Inventeur: ALBOU, Pierre, 93012 Bobigny Cedex (FR)
(74) Mandataire: Valeo Visibility
(86) Numéro de dépôt international: PCT/EP2017/071800
(87) Numéro de publication internationale: WO 2018/041911

(56) Documents cités:
- EP-A1- 2 503 222
- DE-A1-102015 220 543
- DE-U1-202013 006 762
- JP-A- 2004 354 814
- JP-A- 2015 099 638
- US-A1- 2015 156 448

## Description

L'invention concerne un dispositif de signalisation et/ou d'éclairage, notamment pour véhicule automobile. L'invention concerne encore un module d'éclairage, notamment pour véhicule automobile, comprenant un tel dispositif.

Les feux de signalisation des véhicules automobiles, en fonction de leur couleur, permettent d'avertir les autres usagers de la route, notamment des piétons ou d'autres automobilistes, de certaines situations de danger. Ces situations peuvent correspondre à un freinage du véhicule ou encore à une marche arrière de celui-ci.

Il existe cependant un besoin pour un conducteur de pouvoir transmettre, et ainsi partager, des informations plus précises et plus explicites aux autres usagers de la route.

Pour ce faire, il est déjà connu des dispositifs pour véhicule automobile comprenant une source de lumière, un élément de diffusion et un élément commandé de transmission de la lumière agencé entre la source de lumière et l'élément de diffusion. L'élément commandé de transmission est par exemple un système électromécanique comprenant une matrice de micro-miroirs actionnables individuellement, aussi appelée « *Digital Micromirror Device* » ou « *DMD* » de son appellation anglaise. Ces dispositifs peuvent toutefois s'avérer particulièrement coûteux et/ou difficiles à mettre en œuvre. De plus, ces dispositifs mettent parfois en œuvre des lasers ce qui peut alors poser des problèmes de sécurité vis-à-vis des utilisateurs ou lors du montage de ces dispositifs.

Le document EP2503222 A1 montre un exemple de feu arrière de véhicule comprenant des moyens de projection variable de fonctions lumineuses.

Il existe un besoin de proposer une alternative qui soit à la fois économique, simple d'utilisation et sans danger.

L'un des objectifs de cette invention est de proposer une telle alternative. L'invention propose pour ce faire un dispositif de signalisation et/ou d'éclairage, notamment pour véhicule automobile, comprenant :
- des moyens d'émission d'un faisceau lumineux, dit faisceau primaire, comportant une source lumineuse,
- un élément de diffusion et
- des moyens de transmission commandés interposés entre les moyens d'émission et l'élément de diffusion, les moyens de transmission commandés étant commandés pour transmettre sélectivement au moins une partie du faisceau primaire vers l'élément de diffusion afin de former un faisceau, dit faisceau secondaire, selon au moins deux distributions différentes de la lumière,
caractérisé en ce que les moyens commandés de transmission comprennent au moins un écran à cristaux liquides agencé à distance de l'élément de diffusion, une image de l'écran à cristaux liquides étant formée sur l'élément de diffusion, et en ce que l'écran à cristaux liquides est courbé de manière à permettre l'obtention d'un faible angle d'incidence pour chacun des rayons du faisceau primaire sur l'écran à cristaux liquides.

Selon différents modes de réalisation, qui pourront être pris ensemble ou séparément :
- au moins une dimension de l'écran à cristaux liquides est plus petite que la dimension correspondante de l'image formée sur l'élément de diffusion,
- au moins une dimension de l'écran à cristaux liquides est plus petite que la dimension correspondante de l'élément de diffusion,
- le dispositif lumineux comprend en outre une première optique et une deuxième optique,
- la première optique est interposée entre la source et l'écran à cristaux liquides pour former le faisceau primaire,
- la deuxième optique est interposée entre l'écran à cristaux liquides et l'élément de diffusion et est conçue pour former l'image de l'écran sur l'élément de diffusion,
- l'écran à cristaux liquides est muni d'un miroir fixe configuré pour refléter vers l'élément de diffusion au moins une partie du faisceau primaire,
- Le dispositif comprend au moins deux écrans à cristaux liquides et disposés angulairement autour de la source de manière à permettre l'obtention d'un faible angle d'incidence pour chacun des rayons du faisceau primaire sur chaque écran à cristaux liquides,
- le dispositif comprend au moins deux sources lumineuses et autant d'écrans à cristaux liquides, chacune des sources lumineuses étant conçue de manière à illuminer respectivement l'un ou l'autre des écrans à cristaux liquides,
- le faisceau primaire est divergent, les moyens d'émission comportant uniquement la source lumineuse,
- la source lumineuse est ponctuelle
- l'élément de diffusion comprend des luminophores aptes à convertir les longueurs d'onde émises par la source lumineuse en longueurs d'ondes différentes de manière à obtenir une couleur différente de celle de la source lumineuse notamment par fluorescence ou phosphorescence.

L'invention concerne encore un module d'éclairage notamment pour véhicule automobile comprenant un dispositif tel que décrit.

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple non limitatif, en référence aux dessins schématiques annexés :
- La figure 1 est une vue schématique, selon une coupe axiale, d'un dispositif selon un premier mode de réalisation.
- La figure 2 est une vue schématique, selon une coupe axiale, d'un dispositif selon un deuxième mode de réalisation conforme à l'invention.
- La figure 3 est une vue schématique, selon une coupe axiale, d'un dispositif selon un troisième mode de réalisation.
- La figure 4 est une vue schématique, selon une coupe axiale, d'un dispositif selon un quatrième mode de réalisation.
- La figure 5 est une vue schématique, selon une coupe axiale, d'un dispositif selon un cinquième mode de réalisation.
- La figure 6 est une vue schématique, selon une coupe axiale, d'un dispositif selon un sixième mode de réalisation.

L'invention concerne un dispositif de signalisation et/ou d'éclairage, notamment pour véhicule automobile.

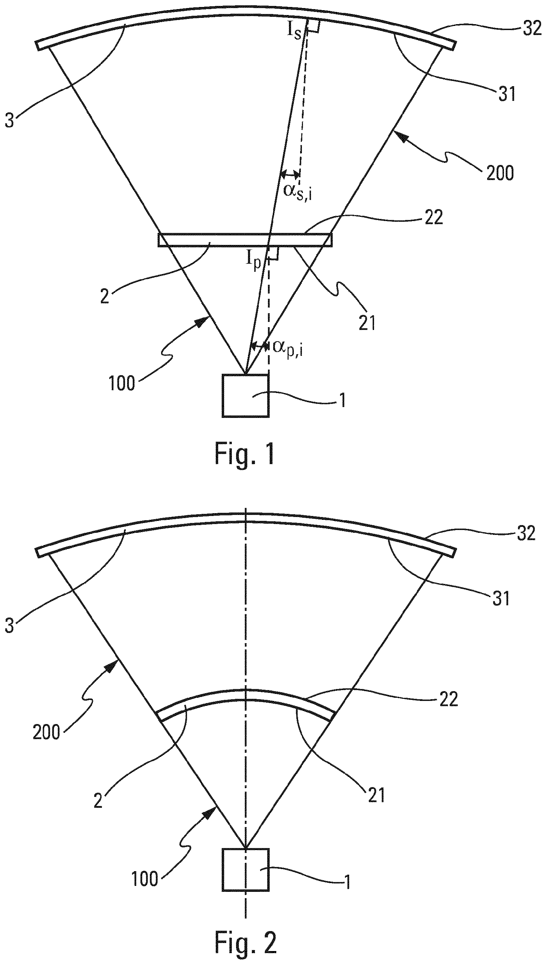

Comme illustré aux figures 1 à 6, le dispositif de signalisation et/ou d'éclairage comprend des moyens d'émission d'un faisceau lumineux, des moyens de transmission commandés et un élément de diffusion 3.

Dans la suite, on appelle « faisceau primaire » 100 une partie du faisceau lumineux issue ou provenant des moyens d'émission et qui se propage des moyens d'émission aux moyens de transmission commandés. Le faisceau primaire 100 est composé de rayons lumineux, dits rayons primaires.

On appelle « faisceau secondaire» 200 la partie du faisceau lumineux issue ou provenant des moyens d'émission et qui se propage des moyens de transmission commandés vers l'élément de diffusion 3. Le faisceau secondaire 200 est composé de rayons lumineux, dits rayons secondaires.

On appelle « faisceau de sortie » la partie du faisceau lumineux, non représentée, issue ou provenant de l'élément de diffusion 3 et qui se propage depuis l'élément de diffusion 3 vers l'extérieur du dispositif de signalisation et/ou d'éclairage.

Le dispositif de signalisation et/ou d'éclairage est conçu pour produire un faisceau de sortie qui satisfait aux exigences réglementaires en vigueur. Ces exigences réglementaires sont relatives notamment à l'intensité du faisceau de sortie, à l'angle de visibilité du faisceau de sortie ainsi qu'à sa couleur.

Les moyens d'émission sont destinés à projeter le faisceau primaire 100 vers des moyens de transmission commandés. Les moyens d'émission comprennent une source lumineuse 1 conçue pour émettre de la lumière, la lumière présentant ici la forme d'un faisceau de lumineux, en direction des moyens de transmission commandés. Autrement dit, la source lumineuse 1 est conçue pour émettre le faisceau primaire 100 en direction des moyens de transmission commandés.

La source lumineuse 1 est ici une source ponctuelle ou quasi ponctuelle. Autrement dit, la lumière émise par la source lumineuse 1 apparaît comme venant sensiblement d'un seul et même point. Notamment, la source lumineuse émet un faisceau qui présente en sortie de la source lumineuse une largeur faible, la largeur du faisceau en sortie de la source étant égale à la plus grande dimension transversale du faisceau au niveau de la sortie de la source lumineuse. La lumière émise par la source lumineuse 1 est de préférence non cohérente. La source lumineuse 1 produit un faisceau lumineux divergent. Autrement dit, les rayons primaires se propagent en s'écartant les uns des autres. En particulier, le faisceau primaire 100 issu de la source lumineuse 2 forme sensiblement un cône. On définit ici une ouverture angulaire du faisceau primaire 100 égale au demi-angle au sommet du cône. Une direction moyenne de propagation du faisceau primaire 100 est sensiblement confondue avec une direction moyenne des génératrices du cône.

Dans le premier mode de réalisation illustré à la figure 1, les moyens d'émission sont exclusivement constitués par la source lumineuse 1.

La source lumineuse 1 est par exemple une diode électroluminescente. La diode électroluminescente peut être commandée par une unité électronique de commande. L'unité électronique de commande permet par exemple de faire varier l'intensité du faisceau lumineux émis par la source lumineuse 1.

Le faisceau lumineux émis par la source lumineuse 1 est conçu pour se propager depuis la source lumineuse 1 jusqu'à l'élément de diffusion 3 en passant par les moyens de transmission.

Les moyens de transmission commandés sont conçus de manière à transmettre sélectivement au moins une partie du faisceau lumineux issu de la source lumineuse 1 vers l'élément de diffusion 3. A cet effet, les moyens de transmission sont interposés sur la trajectoire du faisceau lumineux.

Les moyens de transmission commandés sont ici agencés à distance de l'élément de diffusion. Ils sont en outre agencés à distance de la source lumineuse 1.

Les moyens de transmission commandés sont conçus de manière à recevoir les rayons primaires qui composent le faisceau primaire 100. Plus précisément, les moyens de transmission commandés sont conçus de manière à former, à partir du faisceau primaire 100, le faisceau secondaire 200 se propageant depuis les moyens de transmission commandés jusqu'à l'élément de diffusion 3. En particulier, les moyens de transmission commandés sont conçus de manière à permettre la formation d'une image sur l'élément de diffusion 3. Par la formation d'une image sur l'élément de diffusion 3, on entend par exemple la projection d'une image sur l'élément de diffusion 3.

Les moyens de transmission commandés comprennent au moins un écran à cristaux liquides 2, ici un unique écran à cristaux liquides 2. Dans ce mode de réalisation, les moyens de transmission commandés sont exclusivement constitués par l'écran à cristaux liquides 2.

Les moyens de transmission commandés sont conçus pour pouvoir transmettre vers l'élément de diffusion 3, selon au moins deux distributions différentes, le faisceau lumineux issu de la source lumineuse 1.

L'écran à cristaux liquides 2 est un écran de type « *Liquid Crystal Display* » ou « *LCD* » selon l'appellation anglaise. On entend par écran à cristaux liquides 2 un écran comprenant notamment des polariseurs, des électrodes et des cristaux liquides, la transparence de l'écran à cristaux liquides 2 étant fonction d'un champ électrique appliqué à celui-ci. Avantageusement, l'écran à cristaux liquides 2 comprend des cristaux liquides sans polymère de manière à éviter une diffusion du faisceau lumineux le traversant.

L'écran à cristaux liquides 2 est conçu de manière à permettre la formation d'une image sur l'élément de diffusion 3. Plus particulièrement, l'écran à cristaux liquides 2 est conçu de sorte qu'une image générée par l'écran à cristaux liquides 2 soit formée sur l'élément de diffusion 3. L'image générée par l'écran à cristaux liquides 2 dépend du champ électrique auquel celui-ci est soumis.

Plus précisément, l'application d'un champ électrique à l'écran à cristaux liquides 2, l'écran à cristaux liquides 2 étant initialement intégralement transmissif, permet de créer des zones absorbantes permettant la génération d'une image formée de zones absorbantes et de zones transmissives. On note que de la sorte, en cas de défaillance d'une alimentation électrique permettant la génération du champ électrique, l'écran à cristaux liquides 2 reste transparent.

En variante, l'écran à cristaux liquides 2 est initialement absorbant et l'application d'un champ électrique à l'écran à cristaux liquides 2 permet de créer des zones transmissives de lumière permettant la génération d'une image formée de zones absorbantes et de zones transmissives.

Les zones absorbantes et transmissives sont par exemple formées de pixels. L'image peut alors être formée sur l'élément de diffusion 3, l'image des zones absorbantes formant des ombres sur l'élément de diffusion 3 tandis que l'image des zones transmissives forme des parties illuminées sur l'élément de diffusion 3 par le passage de la lumière à travers l'écran à cristaux liquides 2.

Avantageusement, l'écran à cristaux liquides 2 est commandé par une unité électronique de commande. L'unité électronique de commande permet par exemple à l'utilisateur de choisir la forme de l'image formée sur l'élément de diffusion 3.

L'écran à cristaux liquides 2 est ici plan. Il présente ici une face d'entrée 21 et une face de sortie 22, les deux faces étant opposées l'une à l'autre.

La face d'entrée 21 de l'écran à cristaux liquides 2 est conçue pour recevoir les rayons du faisceau primaire 100 issu de la source lumineuse 1. La face d'entrée 21 de l'écran à cristaux liquides 2 est agencée ici de manière à faire face à la source lumineuse 1. Autrement dit, la première face 21 de l'écran à cristaux liquides est ici agencée en vis-à-vis avec la source lumineuse 2.

La face de sortie 22 de l'écran à cristaux liquides 2 est conçue, elle, de sorte que le faisceau secondaire 200 soit issu de la face de sortie de l'écran à cristaux liquides 2. L'écran à cristaux liquides 2 est conçu de sorte que la deuxième face 22 de l'écran à cristaux liquides 2 soient agencée en vis-à-vis de l'élément de diffusion 3.

De manière avantageuse, l'écran à cristaux liquides 2 permet la formation du faisceau secondaire 200 de sorte que le faisceau secondaire 200 soit directement formé sur l'élément de diffusion 3.

L'écran à cristaux liquides 2 est ici transmissif lorsqu'il n'est pas en fonctionnement. Autrement dit, l'écran à cristaux liquides 2 est conçu de manière à laisser passer la lumière lorsqu'il n'est pas soumis à un champ électrique.

En variante, l'écran à cristaux liquides 2 peut être conçu pour ne pas laisser passer la lumière lorsqu'il n'est pas soumis à un champ électrique.

L'élément de diffusion 3 est agencé à distance de l'écran à cristaux liquides. Or, comme nous l'avons dit, le faisceau lumineux émis par la source lumineuse est divergent. Aussi, au moins une dimension de l'écran à cristaux liquides 2 est plus petite que la dimension correspondante de l'image formée par l'écran à cristaux liquides 2 sur l'élément de diffusion 3.

De même, au moins une dimension de l'écran à cristaux liquides 2 est plus petite que la dimension correspondante de l'élément de diffusion 3. Ainsi, une dimension de l'écran à cristaux liquides 2, mesurée perpendiculairement à une direction générale de propagation du faisceau lumineux, est ici deux fois plus petite que la dimension correspondante de l'élément de diffusion 3. L'écran à cristaux liquides 2 présente par exemple une largeur égale à 35mm, avec des pixels de 50 µm de côté.

L'angle d'incidence α_{p, i} de chacun des rayons primaires est mesuré entre une direction d'incidence de chaque rayon primaire sur la face d'entrée 21 et une normale à la face d'entrée 21 passant par le point d'incidence Iₚ. Le point d'incidence Iₚ correspond ici à un point d'intersection entre le rayon primaire et l'écran à cristaux liquides 2. Avantageusement, l'angle d'incidence α_{p, i} des rayons primaires est inférieur à un angle d'incidence limite au-delà duquel les rayons primaires ne traverseraient plus l'écran à cristaux liquides 2 avec une transmission suffisante et/ou ne seraient plus arrêtés suffisamment par les zones absorbantes de l'écran à cristaux liquides 2. Ici, les rayons primaires présentent chacun un angle d'incidence α_{p, i} inférieur ou égal 30 degrés.

L'élément de diffusion 3 est agencé de manière à recevoir le faisceau secondaire 200 issu des moyens de transmissions. Il est conçu de manière à former le faisceau de sortie à partir du faisceau secondaire 200 provenant de l'écran à cristaux liquides 2. Avantageusement, l'élément de diffusion 3 est conçu de sorte que le faisceau de sortie présente une ouverture angulaire plus importante que celle du faisceau secondaire 200. Cette dernière caractéristique facilite notamment l'observation de pictogrammes et d'éléments de signalisation.

L'élément de diffusion 3 prend ici la forme d'un écran. L'élément de diffusion 3 est conçu pour permettre un passage de la lumière. A cet effet, il est par exemple issu d'une matière transmissive, transparente ou translucide. L'élément de diffusion 3 est ici neutre en couleur ce qui permet d'afficher une image de la même couleur que le faisceau émis par la source lumineuse 1.

En variante, l'élément de diffusion 3 est coloré de manière à colorer l'image formée par l'écran à cristaux liquides 2, par exemple en rouge ou dans une autre couleur.

En variante, l'élément de diffusion 3 comprend des luminophores aptes à convertir des longueurs d'ondes émises par la source lumineuse 1 en longueurs d'ondes différentes de manière à obtenir une couleur différente de celle de la source lumineuse 1, notamment par fluorescence ou phosphorescence.

L'élément de diffusion 3 comprend ici une surface d'entrée 31 conçue pour être agencée en vis-à-vis de l'écran à cristaux liquides 2 et une surface de sortie 32, les deux surfaces 31, 32 étant opposées l'une à l'autre.

En particulier, ici, la surface d'entrée 31 de l'élément de diffusion 3 est conçue pour recevoir le faisceau secondaire 200 issu de la face de sortie 22 de l'écran à cristaux liquides 2. Plus particulièrement, dans l'exemple de réalisation décrit ici, l'élément de diffusion 3 reçoit directement le faisceau secondaire 200 formé par l'écran à cristaux liquides 2. Autrement dit, ici le faisceau secondaire 200 se propage ici directement depuis l'écran à cristaux liquides 2 jusqu'à l'élément de diffusion 3.

L'élément de diffusion 3 est ici sensiblement courbe. L'élément de diffusion 3 est courbé de sorte que la surface d'entrée 31 soit concave et que la surface de sortie 32 soit convexe. La courbure de l'élément de diffusion 3 permet avantageusement l'obtention d'un faible angle d'incidence moyen des rayons secondaires sur l'élément de diffusion 3. La courbure de l'élément de diffusion 3 permet d'augmenter l'angle de visibilité de l'image par un observateur extérieur tel par exemple un piéton ou un automobiliste. Cela permet en outre de suivre au moins partiellement la forme d'une glace extérieure du feu et ainsi d'améliorer l'aspect esthétique et de minimiser la profondeur du système.

L'angle d'incidence moyen des rayons secondaires correspond ici à une moyenne des angles d'incidence α_{s,i} de chaque rayon secondaire. L'angle d'incidence α_{s,i} d'un rayon secondaire correspond à l'angle formé entre, d'une part, la direction de propagation du rayon secondaire et, d'autre part, une normale à la surface d'entrée 31, la normale étant une droite perpendiculaire à la surface d'entrée 31 de l'élément de diffusion 3 passant par un point d'intersection, dit point d'incidence I_{S}, entre le rayon secondaire et la surface d'entrée 31.

En variante non représentée, l'élément de diffusion 3 est plan.

Dans un deuxième mode de réalisation illustré à la figure 2 et conforme à l'invention, l'écran à cristaux liquides 2 présente une forme courbée vers la source lumineuse 1. Autrement dit, l'écran à cristaux liquides 2 présente une courbure. En particulier, l'écran à cristaux liquides 2 présente une face concave correspondant à la face d'entrée 21 et une face convexe correspondant à la face de sortie 22. La face concave 21 est orientée vers la source lumineuse 1.

Par exemple, la courbure de l'écran à cristaux liquides 2 forme un arc de cercle et le centre de courbure est par exemple agencé à proximité de la source lumineuse 1.

L'angle d'incidence moyen du faisceau primaire 100 correspond ici à une moyenne des angles d'incidence α_{p,i} de chacun des rayons primaires. La forme courbée de l'écran à cristaux liquides 2 permet de diminuer l'angle d'incidence moyen du faisceau primaire 100, en permettant d'avoir un faible angle d'incidence α_{p,i} pour chacun des rayons primaires. On peut ainsi augmenter l'ouverture angulaire du faisceau primaire 100 par rapport au premier mode de réalisation sans que l'angle d'incidence α_{p,i} des rayons primaires ne dépasse l'angle d'incidence limite.Selon l'invention, chacun des rayons primaires a ainsi un angle d'incidence α_{p,i} faible,c'est-à-dire inférieur ou égal à 30 degrés, préférentiellement inférieur ou égal à 20 degrés, plus préférentiellement inférieur ou égal à 15 degrés. On optimise avantageusement la courbure de l'écran à cristaux liquides 2 de sorte que l'angle d'incidence moyen du faisceau primaire ait la valeur la plus faible possible.

En outre, la forme courbée de l'écran à cristaux liquides 2 permet de réduire un encombrement généré par le dispositif de signalisation et/ou d'éclairage. En particulier, la forme courbée de l'écran à cristaux liquides 2 permet de réduire une profondeur du dispositif d'éclairage et/ou de signalisation, la profondeur étant une distance mesurée entre la source lumineuse 1 et l'élément de diffusion 3.

Cette configuration permet donc d'obtenir une image large et/ou visible en plusieurs endroits de l'élément de diffusion 3 tout en réduisant l'encombrement généré par le dispositif de signalisation et/ou d'éclairage.

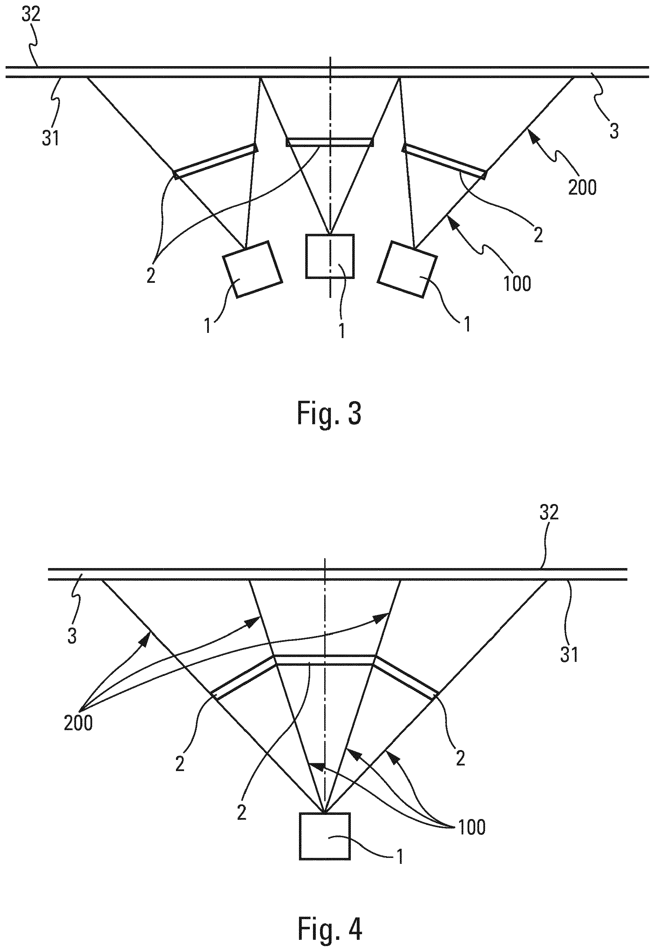

Dans un troisième mode de réalisation illustré à la figure 3, le dispositif de signalisation et/ou d'éclairage comprend au moins deux sources lumineuses 1 et autant d'écrans à cristaux liquides 2. Chacun des écrans à cristaux liquides 2 est associé à une source lumineuse 1 différente.

Ici, chaque source lumineuse 1 produit un faisceau dont la direction moyenne de propagation est confondue avec une normale à l'écran à cristaux liquides 2 auquel la source lumineuse 1 est associée. Avantageusement, la direction moyenne de propagation des faisceaux de chaque source lumineuse 1 est sécante avec une région centrale de l'écran à cristaux liquides 2 associé.

En particulier, le dispositif de signalisation et/ou d'éclairage comprend ici trois sources lumineuses 1 et trois écrans à cristaux liquides 2. Les sources lumineuses 1 sont ici distinctes les unes des autres. Les écrans à cristaux liquides 2 sont distincts et à distance les uns des autres.

Les sources lumineuses 1 et les écrans à cristaux liquides 2 sont ici conçus de manière à permettre la formation d'une seule et même image sur l'élément de diffusion 3. En particulier, chacun des écrans à cristaux liquides 2 contribue ici à former une partie différente de la même image formée sur l'élément de diffusion 3. La formation de chacune des parties de l'image et leur disposition les unes par rapport aux autres sur l'élément de diffusion 3 peut être facilitée par l'utilisation d'un procédé de calibration.

Ici, chacun des écrans à cristaux liquides 2 est agencé en face de l'une des sources lumineuses 1. L'utilisation de plusieurs sources lumineuses 1, chacune des sources lumineuses 1 étant associée à un écran à cristaux liquides 2, permet l'obtention d'une image étendue tout en permettant de conserver un faible angle d'incidence des rayons des faisceaux primaires sur chacun des écrans à cristaux liquides 2.

Ici, la pluralité d'écrans à cristaux liquides 2 permet de conserver un faible angle d'incidence des rayons des faisceaux primaires alors même que les écrans à cristaux liquides 2 sont plans. Cette configuration permet d'obtenir une image large tout en réduisant l'encombrement généré par le dispositif de signalisation et/ou d'éclairage.

Les écrans à cristaux liquides 2 sont ici agencés sensiblement tangentiellement à un même arc de cercle. De même, les sources lumineuses 1 sont elles aussi toutes agencées ici sensiblement sur un même arc de cercle. Les écrans à cristaux liquides 2 et les sources lumineuses 1 peuvent être agencés différemment.

En variante non représentée de l'invention, l'un ou plusieurs des écrans à cristaux liquides 2, voire tous les écrans à cristaux liquides 2 peuvent être courbes. Dans ce cas, la courbure du ou des écrans à cristaux liquides 2 permet de diminuer encore l'angle d'incidence des rayons des faisceaux primaires arrivant sur les écrans à cristaux liquides 2.

Dans un quatrième mode de réalisation illustré à la figure 4, le dispositif de signalisation et/ou d'éclairage est similaire à celui du troisième mode de réalisation à la différence qu'il comprend une unique source lumineuse 1 et plusieurs écrans à cristaux liquides 2, ici trois écrans à cristaux liquides 2.

Les écrans à cristaux liquides 2 sont ici agencés de manière similaire au mode précédent à ceci près qu'ils sont ici contigus et/ou en contact les uns aux autres.

Les écrans à cristaux liquides 2 sont agencés relativement à la source lumineuse 1 de manière à minimiser et/ou diminuer l'angle d'incidence moyen des rayons primaires. En particulier, les écrans à cristaux liquides 2 sont ici répartis angulairement autour de la source lumineuse 1. Les écrans à cristaux liquides 2 sont ici plans. En variante conforme à l'invention, les écrans à cristaux liquides 2 pourront être courbés et/ou incurvés vers la source lumineuse 1. Cette configuration permet d'obtenir une image large et/ou visible en plusieurs endroits de l'élément de diffusion 3 tout en réduisant l'encombrement généré par le dispositif de signalisation et/ou d'éclairage.

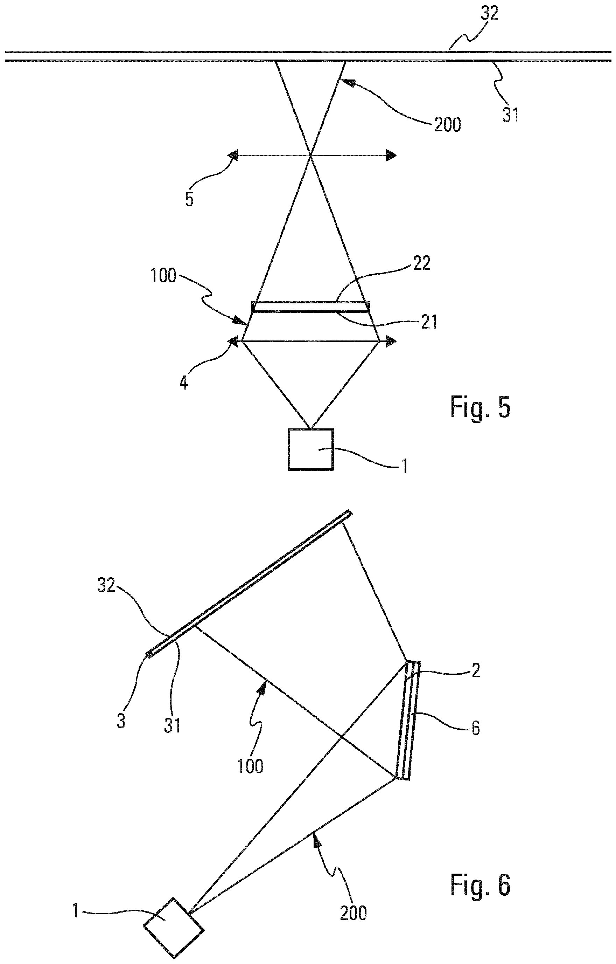

Dans un cinquième mode de réalisation illustré à la figure 5, les moyens d'émission du dispositif de signalisation et/ou d'éclairage comprennent, outre la source lumineuse 1, une première optique 4.

La première optique 4 est par exemple une lentille convergente 4. Elle est conçue pour être interposée entre la source lumineuse 1 et l'écran à cristaux liquides 2, sur le trajet du faisceau lumineux issu de la source lumineuse 1. La première optique 4 est conçue de manière à former le faisceau primaire 100 se propageant directement vers l'écran à cristaux liquides 2. La lentille convergente 4 est conçue pour permettre une convergence des rayons lumineux issus de la source lumineuse 1, notamment vers la deuxième optique 5.

La deuxième optique 5 est par exemple une lentille convergente 5, mais plus généralement un objectif de projection. Elle est interposée entre l'écran à cristaux liquides 2 et l'élément de diffusion 3, sur le trajet du faisceau secondaire 200 issu de l'écran à cristaux liquides 2. La lentille divergente 5 est ici une optique dite imageante. Elle est conçue pour projeter l'image de l'écran à cristaux liquides 2 sur l'élément de diffusion 3.

Le dispositif de signalisation et/ou d'éclairage est ici conçu de manière à ce que les rayons lumineux issus de la source lumineuse 1 puissent converger vers la deuxième optique 5. Autrement dit, la deuxième optique 5 permet par exemple une focalisation du faisceau lumineux issu de la source lumineuse 1. La focalisation permet une bonne efficacité en flux lumineux de la deuxième optique 5. En particulier, la focalisation permet ici de former une image nette de l'écran à cristaux liquides 2 sur l'élément de diffusion 3.

Dans un sixième mode de réalisation, illustré à la figure 6, les moyens de transmission comprennent, outre un écran à cristaux liquides 2, un moyen de réflexion et/ou de réfléchissement, l'écran à cristaux liquides 2 étant alors muni du moyen de réflexion et/ou de réfléchissement. Le moyen de réflexion et/ou de réfléchissement est par exemple assemblé à l'écran à cristaux liquides 2.

Dans ce mode de réalisation, les moyens d'émission sont exclusivement constitués d'une unique source lumineuse 1. Il peut, en variante, en être autrement.

Le moyen de réflexion et/ou de réfléchissement comprend ici un miroir 6. Il s'agit par exemple d'un miroir fixe 6. Le miroir 6 peut être issu de silicium ou d'un matériau aux propriétés physiques similaires. L'ensemble formé du miroir 6 et de l'écran à cristaux liquides 2 correspond ici à un dispositif de type « cristaux liquides sur silicium », encore appelé « *Liquid crystal on silicon* » ou *« LCoS ».*

Notamment, le miroir 6 peut être agencé sur et/ou contre une face de l'écran à cristaux liquides 2. Le dispositif de signalisation et/ou d'éclairage est conçu de sorte que le faisceau lumineux issu de la source lumineuse 1 traverse une première fois l'écran à cristaux liquides 2, se réfléchisse contre le miroir 6, traverse à nouveau l'écran à cristaux liquides 2 et se propage jusqu'à l'élément de diffusion 3.

Avantageusement, l'utilisation du miroir 6 permet plus de flexibilité dans l'agencement des différents éléments du dispositif de signalisation et/ou d'éclairage les uns par rapport aux autres. Cette flexibilité permet notamment de réduire l'encombrement généré par le dispositif de signalisation et/ou d'éclairage à l'intérieur d'un véhicule automobile.

Dans tous les modes de réalisation précédents, il est possible de remplacer, moyennant, le cas échéant, les adaptations nécessaires, un ou chaque écran à cristaux liquides 2 par un dispositif de type « *LCoS* » tel que décrit dans le mode actuel.

L'invention concerne encore un module d'éclairage comprenant un dispositif tel que décrit. Le module d'éclairage est par exemple un boitier d'éclairage.

## Revendications

1. Dispositif de signalisation et/ou d'éclairage, notamment pour véhicule automobile, comprenant :
- des moyens d'émission d'un faisceau lumineux, dit faisceau primaire 100, comportant une source lumineuse (1),
- un élément de diffusion (3) et
- des moyens de transmission commandés interposés entre les moyens d'émission et l'élément de diffusion (3), les moyens de transmission commandés étant commandés pour transmettre sélectivement au moins une partie du faisceau primaire (100) vers l'élément de diffusion (3) afin de former un faisceau, dit faisceau secondaire (200), selon au moins deux distributions différentes de la lumière,
**caractérisé en ce que** les moyens commandés de transmission comprennent au moins un écran à cristaux liquides (2) agencé à distance de l'élément de diffusion (3), une image de l'écran à cristaux liquides (2) étant formée sur l'élément de diffusion (3), dans lequel l'écran à cristaux liquides (2) est courbé de manière à permettre l'obtention d'un faible angle d'incidence pour chacun des rayons du faisceau primaire (100) sur l'écran à cristaux liquides (2).

2. Dispositif selon la revendication précédente dans lequel au moins une dimension de l'écran à cristaux liquides (2) est plus petite que la dimension correspondante de l'image formée sur l'élément de diffusion (3).

3. Dispositif selon l'une quelconque des revendications précédentes dans lequel au moins une dimension de l'écran à cristaux liquides (2) est plus petite que la dimension correspondante de l'élément de diffusion (3).

4. Dispositif selon l'une quelconque des revendications précédentes dans lequel le dispositif lumineux comprend en outre une première optique (4) et une deuxième optique (5), la première optique (4) étant interposée entre la source (1) et l'écran à cristaux liquides (2) pour former le faisceau primaire 100, la deuxième optique (5) étant interposée entre l'écran à cristaux liquides (2) et l'élément de diffusion (3) et étant conçue pour former l'image de l'écran (2) sur l'élément de diffusion (3).

5. Dispositif selon l'une quelconque des revendications précédentes dans lequel l'écran à cristaux liquides (2) est muni d'un miroir fixe (6) configuré pour refléter vers l'élément de diffusion (3) au moins une partie du faisceau primaire (100).

6. Dispositif selon l'une quelconque des revendications précédentes comprenant au moins deux écrans à cristaux liquides (2) et disposés angulairement autour de la source (1) de manière à permettre l'obtention d'un faible angle d'incidence pour chacun des rayons du faisceau primaire (100) sur chaque écran à cristaux liquides (2).

7. Dispositif selon l'une quelconque des revendications précédentes comprenant au moins deux sources lumineuses (1) et autant d'écrans à cristaux liquides (2), chacune des sources lumineuses (1) étant conçue de manière à illuminer respectivement l'un ou l'autre des écrans à cristaux liquides (2).

8. Dispositif selon l'une quelconque des revendications précédentes dans lequel le faisceau primaire 100 est divergent, les moyens d'émission comportant uniquement la source lumineuse (1).

9. Dispositif selon l'une quelconque des revendications précédentes dans lequel la source lumineuse (1) est ponctuelle.

10. Dispositif selon l'une quelconque des revendications précédentes dans lequel l'élément de diffusion (3) comprend des luminophores aptes à convertir les longueurs d'onde émises par la source lumineuse (1) en longueurs d'ondes différentes de manière à obtenir une couleur différente de celle de la source lumineuse (1) notamment par fluorescence ou phosphorescence.

11. Module d'éclairage notamment pour véhicule automobile comprenant un dispositif de signalisation et/ou d'éclairage selon l'une quelconque des revendications précédentes.

## Patentansprüche

1. Beleuchtungs- und/oder Signalisierungsvorrichtung, insbesondere für ein Kraftfahrzeug, die Folgendes aufweist:
- Mittel zur Emission eines Lichtstrahls, eines sogenannten Primärstrahls 100, die eine Lichtquelle enthalten (1),
- ein Diffusionselement (3) und
- gesteuerte Übertragungsmittel, die zwischen den Mitteln zur Emission und dem Diffusionselement (3) angeordnet sind, wobei die gesteuerten Übertragungsmittel so gesteuert werden, dass sie selektiv mindestens einen Teil des Primärstrahls (100) zum Diffusionselement (3) übertragen, um einen sogenannten Sekundärstrahl (200) zu bilden, gemäß mindestens zwei unterschiedlichen Lichtverteilungen,
**dadurch gekennzeichnet, dass** die gesteuerten Übertragungsmittel mindestens einen Flüssigkristallbildschirm (2) aufweisen, der in einem Abstand zum Diffusionselement (3) angeordnet ist, wobei ein Bild des Flüssigkristallbildschirms (2) auf dem Diffusionselement (3) gebildet wird, wobei der Flüssigkristallbildschirm (2) so gekrümmt ist, dass für jeden der Strahlen des Primärstrahls (100) auf dem Flüssigkristallbildschirm (2) ein kleiner Einfallswinkel erhalten wird.

2. Vorrichtung nach dem vorhergehenden Anspruch, wobei mindestens eine Abmessung des Flüssigkristallbildschirms (2) kleiner ist als die entsprechende Abmessung des auf dem Diffusionselement (3) erzeugten Bildes.

3. Vorrichtung nach einem der vorhergehenden Ansprüche, wobei mindestens eine Abmessung des Flüssigkristallbildschirms (2) kleiner ist als die entsprechende Abmessung des Diffusionselements (3).

4. Vorrichtung nach einem der vorhergehenden Ansprüche, wobei die Beleuchtungsvorrichtung darüber hinaus eine erste Optik (4) und eine zweite Optik (5) aufweist, wobei die erste Optik (4) zwischen der Quelle (1) und dem Flüssigkristallbildschirm (2) angeordnet ist, um den Primärstrahl 100 zu bilden, die zweite Optik (5) zwischen dem Flüssigkristallbildschirm (2) und dem Diffusionselement (3) angeordnet ist und dafür ausgelegt ist, das Bild des Bildschirms (2) auf dem Diffusionselement (3) zu bilden.

5. Vorrichtung nach einem der vorhergehenden Ansprüche, wobei der Flüssigkristallbildschirm (2) mit einem feststehenden Spiegel (6) versehen ist, der so konfiguriert ist, dass er zumindest einen Teil des Primärstrahls (100) zum Diffusionselement (3) reflektiert.

6. Vorrichtung nach einem der vorhergehenden Ansprüche, die mindestens zwei Flüssigkristallbildschirme (2) aufweist, die winklig so um die Quelle (1) angeordnet sind, dass es ermöglicht wird, dass für jeden der Strahlen des Primärstrahls (100) auf jedem der Flüssigkristallbildschirme (2) ein kleiner Einfallswinkel erhalten wird.

7. Vorrichtung nach einem der vorhergehenden Ansprüche, die mindestens zwei Lichtquellen (1) aufweist und ebenso viele Flüssigkristallbildschirme (2), wobei jede Lichtquelle (1) dafür ausgelegt ist, dass sie jeweils den einen oder den anderen der Flüssigkristallbildschirme beleuchtet (2).

8. Vorrichtung nach einem der vorhergehenden Ansprüche, bei der der Primärstrahl 100 divergent ist, wobei die Mittel zur Emission nur die Lichtquelle (1) umfassen.

9. Vorrichtung nach einem der vorhergehenden Ansprüche, bei der die Lichtquelle (1) punktförmig ist.

10. Vorrichtung nach einem der vorhergehenden Ansprüche, bei der das Diffusionselement (3) Leuchtstoffe aufweist, die in der Lage sind, die von der Lichtquelle (1) emittierten Wellenlängen so in unterschiedliche Wellenlängen umzuwandeln, dass eine andere Farbe als die der Lichtquelle (1) erhalten wird, insbesondere durch Fluoreszenz oder Phosphoreszenz.

11. Beleuchtungsmodul, insbesondere für ein Kraftfahrzeug, das eine Beleuchtungs- und/oder Signalisierungsvorrichtung nach einem der vorhergehenden Ansprüche aufweist.

## Claims

1. Signalling and/or lighting device, in particular for a motor vehicle, comprising:
- means for emitting a light beam, called the primary beam (100), including a light source (1),
- a scattering element (3) and
- controlled transmitting means interposed between the emitting means and the scattering element (3), the controlled transmitting means being controlled in order to selectively transmit at least one portion of the primary beam (100) toward the scattering element (3) in order to form a beam, called the secondary beam (200), with at least two different distributions of the light,
**characterized in that** the controlled transmitting means comprise at least one liquid-crystal display (2) arranged at distance from the scattering element (3), an image of the liquid-crystal display (2) being formed on the scattering element (3), wherein the liquid-crystal display (2) is curved so as to allow a small angle of incidence to be obtained for each of the rays of the primary beam (100) on the liquid-crystal display (2).

2. Device according to the preceding claim, wherein at least one dimension of the liquid-crystal display (2) is smaller than the corresponding dimension of the image formed on the scattering element (3).

3. Device according to either of the preceding claims, wherein at least one dimension of the liquid-crystal display (2) is smaller than the corresponding dimension of the scattering element (3).

4. Device according to any one of the preceding claims, wherein the luminous device furthermore comprises a first optic (4) and a second optic (5), the first optic (4) being interposed between the source (1) and the liquid-crystal display (2) in order to form the primary beam (100), the second optic (5) being interposed between the liquid-crystal display (2) and the scattering element (3) and being designed to form the image of the display (2) on the scattering element (3).

5. Device according to any one of the preceding claims, wherein the liquid-crystal display (2) is equipped with a fixed mirror (6) configured to reflect toward the scattering element (3) at least one portion of the primary beam (100).

6. Device according to any one of the preceding claims comprising at least two liquid-crystal displays (2) placed angularly about the source (1) so as to allow a small angle of incidence to be obtained for each of the rays of the primary beam (100) on each liquid-crystal display (2).

7. Device according to any one of the preceding claims comprising at least two light sources (1) and as many liquid-crystal displays (2), each of the light sources (1) being designed so as to illuminate one or other of the liquid-crystal displays (2), respectively.

8. Device according to any one of the preceding claims, wherein the primary beam (100) is divergent, the emitting means including solely the light source (1) .

9. Device according to any one of the preceding claims, wherein the light source (1) is point-like.

10. Device according to any one of the preceding claims, wherein the scattering element (3) comprises luminophores suitable for converting the wavelengths emitted by the light source (1) into different wavelengths so as to obtain a different colour from that of the light source (1) in particular by fluorescence or phosphorescence.

11. Lighting module in particular for a motor vehicle, comprising a signalling and/or lighting device according to any one of the preceding claims.
